# FASCICULE DE BREVET EUROPEEN

(11) **EP 4 655 518 B1**
(45) Date de publication et mention de la délivrance du brevet: **11.11.2026**
(21) Numéro de dépôt: 24711255.0
(22) Date de dépôt: 24.01.2024
(51) Int. Cl.: F16L 1/024, E03B 7/00, F16L 1/06, F16L 58/00

(54) **PROCÉDÉ DE PROTECTION CONTRE LA CORROSION D'UNE CONDUITE EN ACIER**
VERFAHREN ZUM KORROSIONSSCHUTZ EINES STAHLROHRES
METHOD FOR PROTECTING A STEEL PIPE FROM CORROSION

(30) Priorité: 26.01.2023 FR 2300743
(43) Date de publication de la demande: 03.12.2025
(73) Titulaire: Electricité de France, 75008 Paris (FR)
(72) Inventeur: SCHWACH, Julien, 73000 Chambery (FR); LE CALVE, Philippe, 56260 Larmor-Plage (FR)
(74) Mandataire: Regimbeau
(86) Numéro de dépôt international: PCT/FR2024/050094
(87) Numéro de publication internationale: WO 2024/156963

(56) Documents cités:
- US-A1- 2004 084 572
- US-A1- 2015 078 832
- US-B2- 10 066 764

## Description

### DOMAINE DE L'INVENTION

L'invention se situe dans le domaine de la protection contre la corrosion.

La présente invention concerne plus précisément un procédé de protection contre la corrosion d'une conduite en acier, notamment une conduite forcée, reposant sur un support en acier de type berceau.

Par « conduite forcée », on désigne une conduite permettant d'amener de l'eau sous pression d'un réservoir situé en hauteur jusqu'à la turbine d'une centrale hydroélectrique.

### ETAT DE LA TECHNIQUE

Lorsqu'une conduite en acier repose sur un support en acier, on observe souvent un effet de corrosion s'il y a de l'humidité présente au niveau de l'interface entre les deux.

Dans le cas particulier des conduites forcées, qui sont des canalisations permettant de transporter de l'eau sous pression d'un point à un autre, et qui sont disposées en extérieur, on observe souvent un effet de corrosion de l'acier. Cette corrosion génère des pertes d'épaisseur de la conduite et du support, qui peuvent être préjudiciables à la tenue mécanique de l'ouvrage.

Une première solution connue de l'état de la technique pour résoudre ce problème, consiste à effectuer des modifications sur le support en forme de berceau et sur la conduite pour rendre leur surface de contact plane et à prévoir une plaque en acier inoxydable au contact de la conduite et des patins en PEHD haute densité au contact du support, de façon à avoir ainsi deux matériaux insensibles à la corrosion.

Une deuxième solution connue de l'état de la technique pour résoudre ce problème, consiste à recouvrir la conduite et son support en forme de berceau d'un revêtement anticorrosion, au moins au niveau des points de contact entre les deux (par injection de peinture diluée au contact entre la conduite et le support). Toutefois, un tel revêtement n'a qu'une très faible durabilité, en raison des mouvements et frottements relatifs réguliers entre la conduite forcée et son support et de la non-résistance des revêtements anticorrosion aux frottements. Cette solution n'est donc plus mise en œuvre étant donné le retour d'expérience très négatif quant à son efficience.

La mise en œuvre de la première solution (soit la seule solution durable et efficiente) s'avère particulièrement difficile pour des conduites forcées, qui alimentent notamment des centrales hydroélectriques et qui, en conséquence, sont souvent situées dans des zones montagneuses, présentant une forte pente et difficiles d'accès.

Par ailleurs, le parc hydroélectrique de la demanderesse est important, puisqu'on considère que le nombre de ces supports est de l'ordre de dix mille.

La solution technique connue, durable et efficiente précitée est donc extrêmement onéreuse, longue et fastidieuse à mettre en œuvre, compte tenu du nombre de ces supports et du fait qu'il est nécessaire de transporter du matériel, des outils et du personnel d'intervention dans des zones montagneuses sans accès routier, ce qui nécessite des héliportages.

On connait également d'après le document US 10 066 764, un procédé de prévention de la corrosion à l'interface de contact entre une conduite en acier à protéger et un berceau de support de cette conduite. Toutefois, ce document décrit uniquement un support de tuyau présentant une série de crêtes adjacentes avec des vallées intermédiaires, afin de drainer un fluide susceptible de s'accumuler sous le tuyau.

On connait aussi d'après le document US 2015/078832, un appareil pour soulever et supporter des pipelines à travers lesquels circulent du carburant, du gaz ou des liquides industriels dangereux, et ce, à des fins de maintenance et de restauration.

Enfin, on connait d'après le document US 2004/084572, un support de pipeline destiné à supporter un pipeline le long de son axe longitudinal. Ce support est composé de deux supports cylindriques longitudinaux montés sur des tiges filetées transversales. Le second support est mobile le long des tiges afin de pouvoir être déplacé et permettre l'inspection du pipeline.

Aucun de ces trois documents ne décrit les étapes mentionnées dans le procédé de l'invention.

### EXPOSE DE L'INVENTION

L'invention a donc pour but de proposer un procédé de protection contre la corrosion d'une conduite en acier et de son support en acier, qui soit efficient, durable, simple à mettre en œuvre et moins coûteux que les procédés connus de l'état de la technique.

A cet effet, l'invention concerne un procédé de prévention de la corrosion à l'interface de contact entre une conduite en acier à protéger, notamment une conduite forcée, et un berceau de support en acier de cette conduite, dit « berceau à protéger », cette conduite reposant sur ledit berceau à protéger et sur au moins un autre berceau de support.

Conformément à l'invention, ce procédé comprend les étapes suivantes :
- a) calcul de la force de levage F à appliquer en un point de soulèvement de la conduite à protéger pour soulever ladite conduite à protéger d'une hauteur f comprise entre 0,03 m et 0,06 m, par rapport audit berceau à protéger,
- b) calcul de la valeur de la contrainte σ subie par ladite conduite lors du levage à ladite hauteur f,
- c) comparaison de cette valeur de contrainte σ subie avec une valeur maximale de contrainte σ max au-delà de laquelle la conduite est endommagée, cette valeur maximale de contrainte σ max étant égale à min (Re / 1,35 ; Rm / 1,8), Re étant la limite élastique du matériau constituant ladite conduite et Rm étant la résistance à la rupture du matériau constituant la conduite, et si σ est inférieure ou égale à σ max, alors réalisation des étapes suivantes :
   -d) choix d'un dispositif de levage, tel un vérin, capable d'appliquer la force de levage F calculée à l'étape a),
   -e) pose d'au moins une plaque de répartition d'efforts sur le sol, au droit du point de soulèvement de la conduite, fixation d'un berceau de soulèvement contre ladite conduite au niveau dudit point de soulèvement et positionnement du dispositif de levage choisi à l'étape d) entre ladite plaque de répartition d'efforts et le berceau de soulèvement,
   f) actionnement du dispositif de levage pour soulever la conduite de la hauteur f au-dessus du berceau à protéger,
   g) introduction d'au moins une tôle en zinc entre ledit berceau à protéger et la conduite à protéger, cette tôle en zinc couvrant la totalité de la surface de contact entre la conduite à protéger et le berceau à protéger,
   h) abaissement de la conduite à protéger pour la poser sur ladite au moins une tôle de zinc.

Grâce à ces caractéristiques de l'invention, la conduite en acier peut être soulevée sans être endommagée et ladite au moins une tôle de zinc insérée entre le berceau de support en acier et la conduite en acier sert de pile de corrosion, se corrode et empêche ainsi la corrosion des pièces en acier.

En outre, les outils utilisés (outil de levage, plaque de répartition d'efforts et berceau de soulèvement) peuvent aisément être transportés sur le site d'intervention.

Enfin, ce procédé est simple à mettre en œuvre et peu couteux.

De préférence, ladite au moins une tôle en zinc est fixée sur le berceau à protéger par pliage et martelage de ses rebords contre ledit berceau à protéger et/ou par fixation à l'aide d'éléments de fixation, tels des vis et chevilles.

De préférence, le point de soulèvement est situé à une distance dudit berceau à protéger inférieure à 2 mètres, de préférence inférieure à 1 mètres.

De façon avantageuse, le berceau de soulèvement est choisi de façon à présenter une surface de contact avec la conduite à protéger égale ou supérieure à la surface de contact entre le berceau à protéger et la conduite à protéger.

Selon une première variante de réalisation, ladite conduite en acier à protéger est retenue de manière fixe dans un massif d'ancrage amont et dans un massif d'ancrage aval, ledit berceau à protéger et ledit au moins un autre berceau de support sont disposés entre ledit massif d'ancrage amont et ledit massif d'ancrage aval, le point de soulèvement est situé à une distance du massif d'ancrage amont ou aval dont il est le plus proche qui est inférieure ou égale à 20 mètres.

Selon cette première variante, la force de levage F, exprimée en Newton, est égale à : $2 , 5 \times L \times m \times g \times cos \left(α\right) + 3 \times E \times I \times f / {Lm}^{3}$

Selon cette première variante la contrainte σ, exprimée en Pa, subie par ladite conduite lors du soulèvement à ladite hauteur f exprimée en mètres, est égale à : $M x D / \left(2 x I\right) + La x ma x g x sin \left(αa\right) / S + 3 x E x f x D / \left(2 x {Lm}^{2}\right) ,$ avec M égal au moment de la flexion liée au poids de la conduite à protéger (1), exprimé en N.m et M = L / 4 x g x m x cos(α).

Selon une deuxième variante de réalisation, ladite conduite en acier à protéger est retenue de manière fixe dans un massif d'ancrage amont et dans un massif d'ancrage aval, ladite conduite en acier à protéger est supportée par au moins quatre berceaux de support dont ledit berceau à protéger, disposés entre ledit massif d'ancrage amont et ledit massif d'ancrage aval, en ce que le point de soulèvement est situé à une distance du massif d'ancrage amont ou aval dont il est le plus proche qui est supérieure à 20 mètres.

Selon cette deuxième variante, la force de levage F, exprimée en Newton, est égale à :
3 x L1 x m1 x g x cos(αb)

Selon cette deuxième variante, la contrainte σ, exprimée en Pa, subie par ladite conduite lors du soulèvement à ladite hauteur f, exprimée en mètres, est égale à : $M \times D / \left(2\times I\right) + La \times ma \times g \times sin \left(αa\right) / S ,$ avec M égal au moment de la flexion liée au poids de la conduite à protéger (1), exprimé en N.m et M = L1 / 3 x g x m1 x cos(αb).

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] est un schéma d'une conduite, telle une conduite forcée, supportée sur plusieurs berceaux de support et retenue de manière fixe dans un massif d'ancrage amont et dans un massif d'ancrage aval.
[Fig 2] est un schéma similaire à celui de la figure 1, mais dans lequel la conduite est soulevée, le point de soulèvement étant situé à une distance du massif d'ancrage aval inférieure ou égale à 20 mètres.
[Fig. 3] est un schéma similaire à la figure 1, mais dans lequel le point de soulèvement envisagé est situé à une distance du massif d'ancrage amont supérieure à 20 mètres.
[Fig 4] est un schéma similaire à la figure 3, mais dans lequel la conduite est soulevée.

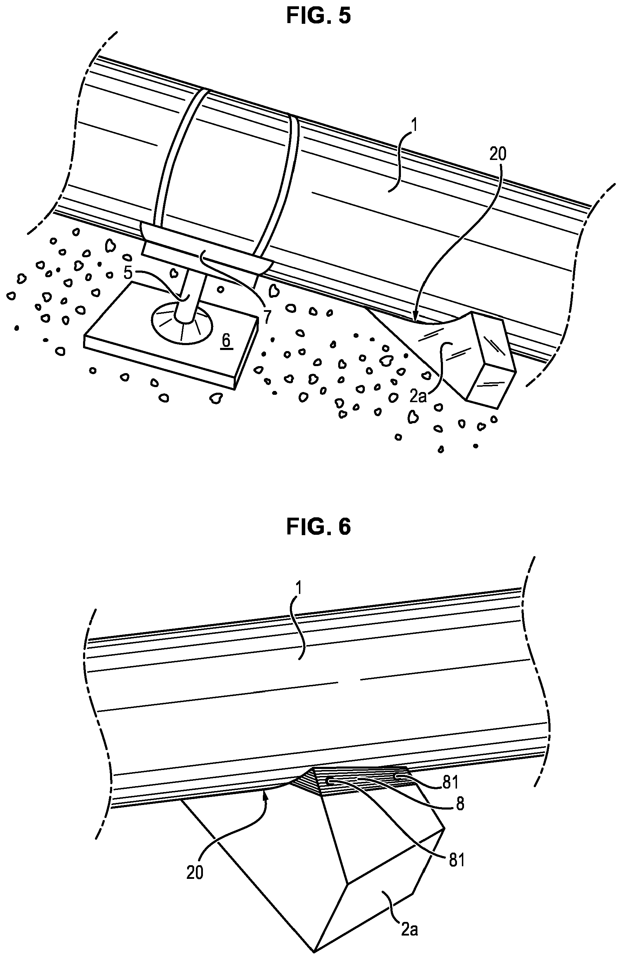

[Fig. 5] est une vue en perspective d'une partie d'une conduite prête à être soulevée au-dessus de son berceau de support.
[Fig. 6] est une vue en perspective d'une partie d'une conduite reposant sur son berceau de support, après la mise en œuvre du procédé conforme à l'invention.

### DESCRIPTION DETAILLEE DE L'INVENTION

En se reportant aux figures, on peut voir que la conduite en acier 1 à protéger repose généralement sur au moins deux berceaux de support en acier 2, généralement plus, espacés les uns des autres, de préférence d'une distance constante. Cette conduite en acier 1 est par exemple une conduite forcée.

Parmi le ou les berceau(x) de support en acier 2, on distingue sur les schémas, un berceau de support à protéger, référencé 2a, qui est celui que l'on souhaite protéger de la corrosion.

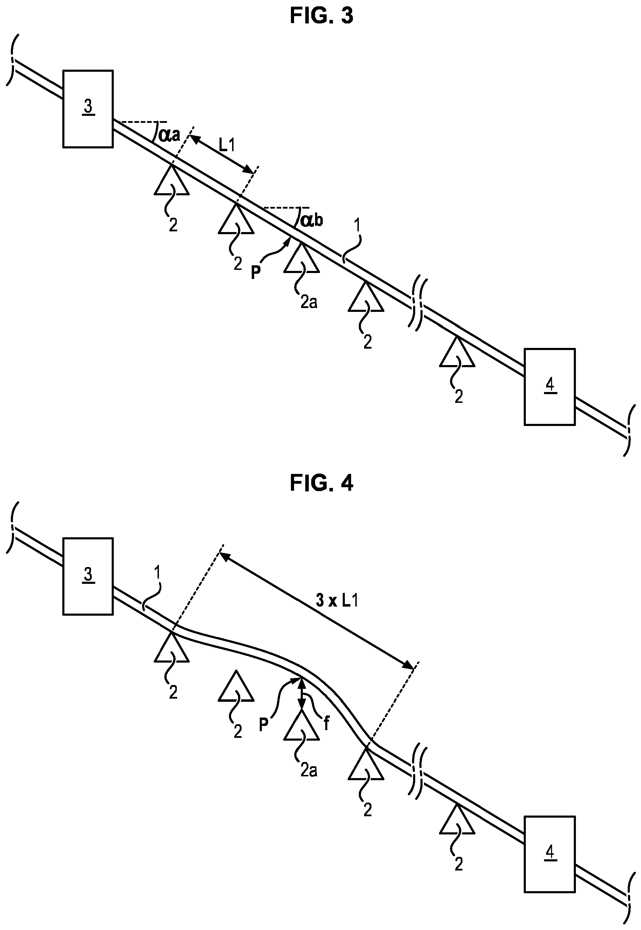

Les berceaux de support 2 et le berceau à protéger 2a présentent une portion incurvée 20 épousant une partie de la circonférence de la conduite cylindrique 1, comme on peut le voir par exemple sur les figures 3 et 4. Cette portion 20 constitue l'interface de contact entre la conduite 1 et le berceau 2, 2a.

La conduite 1 peut se déplacer légèrement (c'est-à-dire coulisser) par rapport aux berceaux de support 2, 2a.

De préférence, la conduite en acier 1 est également retenue de manière fixe (sans possibilité de coulissement) dans au moins deux massifs d'ancrage et généralement plus de deux, disposés sur toute la longueur d'une conduite 1.

Le procédé conforme à l'invention consiste à prévenir la corrosion à l'interface de contact 20 entre la conduite 1 et le berceau de support à protéger 2a :
- en soulevant au niveau d'un point de soulèvement P, ladite conduite à protéger 1, de façon à l'écarter dudit berceau de support à protéger 2a, d'une hauteur f comprise entre 0,03 m et 0,06 m (entre 30 mm et 60 mm),
- en introduisant au moins une tôle en zinc 8 entre ledit berceau à protéger 2a et la conduite à protéger 1, cette tôle en zinc 8 couvrant la totalité de la surface de contact 20 entre la conduite à protéger 1 et le berceau à protéger 2a,
- en abaissant la conduite à protéger 1 pour la poser sur ladite au moins une tôle de zinc 8.

En raison de l'humidité présente au niveau de la surface de contact 20, on crée ainsi une pile de corrosion, avec une circulation des électrons qui arrête la corrosion des parties en acier en corrodant la tôle de zinc 8, cette dernière étant ainsi sacrifiée.

De préférence, le point de soulèvement P est situé à une distance dudit berceau à protéger 2a inférieure à 2 mètres, de préférence inférieure à 1 mètres. Ceci permet de ne pas trop soulever la conduite 1 pour la lever de la hauteur f précitée.

Afin de mettre en œuvre le procédé de prévention de la corrosion précité, on réalise tout d'abord les étapes suivantes :
- a) calcul de la force de levage F à appliquer en un point de soulèvement P de la conduite à protéger 1, pour soulever ladite conduite à protéger 1 d'une hauteur f comprise entre 0,03 m et 0,06 m, par rapport audit berceau à protéger 2a,
- b) calcul de la valeur de la contrainte σ subie par ladite conduite 1 lors du levage à ladite hauteur f, et
- c) comparaison de cette valeur de contrainte σ subie avec une valeur maximale de contrainte σ max au-delà de laquelle la conduite 1 est endommagée.

Cette valeur maximale de contrainte σ max est égale à min (Re / 1,35 ; Rm / 1,8), Re étant la limite élastique du matériau constituant ladite conduite 1 et Rm étant la résistance à la rupture du matériau constituant la conduite 1.

La hauteur f est choisie pour pouvoir glisser la tôle 8 et ne pas devoir trop soulever la conduite 1.

A l'issue de la comparaison, si l'on constate que σ est supérieure à σ max, alors on considère que l'on ne peut pas soulever ladite conduite 1 de la hauteur f souhaitée sans risque d'endommagement et le procédé est stoppé.

Inversement, si à l'issue de la comparaison, on constate que σ est inférieure ou égale à σ max, alors on réalise les étapes suivantes :
- d) choix d'un dispositif de levage 5, tel un vérin, capable d'appliquer la force de levage F calculée à l'étape a),
- e) pose d'une plaque de répartition d'efforts 6 sur le sol, au droit du point de soulèvement P de la conduite 1, fixation d'un berceau de soulèvement 7 contre ladite conduite 1 au niveau dudit point de soulèvement P et positionnement du dispositif de levage 5 choisi à l'étape d) entre ladite plaque de répartition d'efforts 6 et le berceau de soulèvement 7,

f) actionnement du dispositif de levage 5 pour soulever la conduite 1 de la hauteur f au-dessus du berceau à protéger 2a,
g) introduction d'au moins une tôle en zinc 8 entre ledit berceau à protéger 2a et la conduite à protéger 1,
h) abaissement de la conduite à protéger 1 pour la poser sur ladite au moins une tôle de zinc 8.

En pratique, un terrassement peut être effectué avant de placer la plaque de répartition d'efforts. De préférence, le berceau de soulèvement 7 est fixé, par exemple sanglé sur la conduite 1.

De préférence, on peut disposer un ou plusieurs tôles 8, par exemple d'une à cinq tôles, d'une épaisseur de préférence voisine de 1 mm. Le nombre de tôles dépend de la durée de protection choisie, qui augmente avec le nombre de tôles.

De préférence, la ou chaque tôle de zinc 8 est fixée sur le berceau à protéger 2a par pliage et martelage de ses rebords contre ledit berceau à protéger 2a et/ou par fixation à l'aide d'éléments de fixation 81, tels des vis et chevilles, (voir figure 4).

Comme mentionné précédemment, la conduite 1 est retenue dans au moins deux massifs d'ancrage et même généralement plus de deux.

Dans la suite de la description et des revendications, on considère toutefois qu'une portion de la conduite 1 est retenue dans un massif d'ancrage amont 3 et dans un massif d'ancrage aval 4 et que le point P de soulèvement de la conduite se trouve entre ces deux massifs 3 et 4.

### Première situation :

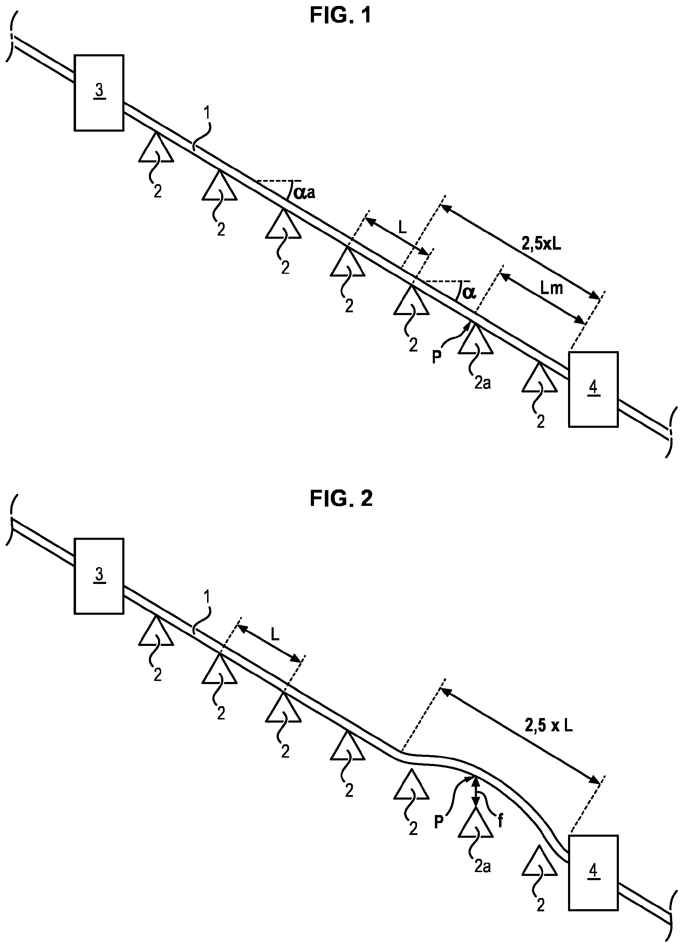

La figure 1 illustre une première situation dans laquelle la conduite 1 à protéger est retenue de manière fixe dans un massif d'ancrage amont 3 et dans un massif d'ancrage aval 4, et le berceau à protéger 2a et ledit au moins un autre berceau de support 2 sont disposés entre ledit massif d'ancrage amont 3 et ledit massif d'ancrage aval 4.

Par ailleurs, sur la figure 1, le point de soulèvement P est situé à une distance du massif d'ancrage amont 3 ou du massif d'ancrage aval 4 dont il est le plus proche, qui est inférieure ou égale à 20 mètres. Dans l'exemple représenté le point P est à 20 mètres ou moins du massif d'ancrage aval 4.

Dans cette première situation, la force de levage F à appliquer pour soulever la conduite 1 et la contrainte σ subie par cette conduite lors de ce soulèvement sont calculées comme suit.

### Calcul de la force de levage F à appliquer pour soulever la conduite 1 d'une hauteur f comprise entre 0,03 mètres et 0,06 mètres, par rapport audit berceau à protéger 2a :

La force de levage F, exprimée en Newton, est égale à : $2 , 5 \times L \times m \times g \times cos \left(α\right) + 3 \times E \times I \times f / {Lm}^{3}$ avec :
Lm (voir figure 1) est égal à la distance entre le point de soulèvement P de la conduite à protéger 1 et le massif d'ancrage aval 4 ou amont 3 le plus proche de ce point de soulèvement P. Lm est exprimée en mètres et Lm est inférieure ou égale à 20 mètres.

L est égal à la distance maximale entre deux berceaux de support 2 successifs sur une distance égale à 3 x Lm, cette distance de 3 x Lm étant mesurée depuis le massif d'ancrage amont 3 ou aval 4 dont le point de soulèvement P est le plus proche. Par exemple, si le point de soulèvement est à une distance inférieure ou égale à 20 m à l'amont du massif aval 4, la distance 3 x Lm est à considérer à l'amont du massif aval en partant de ce dernier massif. Si le point de soulèvement est à une distance inférieure ou égale à 20 m à l'aval du massif amont 3, la distance 3 x Lm est à considérer à l'aval du massif amont en partant de ce dernier massif. En d'autres termes, si les distances entre deux berceaux successifs 2 sont différentes sur la distance 3 x Lm, alors on retient la valeur L maximale de ces différentes distances et si ces distances sont constantes, alors la distance maximale correspond à L.

L est exprimée en mètres.

Comme on peut le voir sur la figure 2, on considère que la longueur de la conduite 1 dont la masse est reprise (soulevée) par le dispositif de levage 5 lorsque celui-ci est appliqué au point de soulèvement P, est égale à 2,5 x L.

En conséquence, m est égal à la valeur maximale de la masse par unité de longueur de la conduite 1, sur la longueur de la conduite 1 égale à 2,5 x L dont la masse est reprise par le dispositif de levage 5. En d'autres termes, que cette masse par unité de longueur soit constante ou non sur la longueur de 2,5 x L, on prend la valeur maximale.

m est exprimée en kg/m.

g (accélération de la pesanteur à la surface de la terre) est égal à 9,81 m/s².

E est égal au module de Young du matériau de la conduite 1. E est exprimé en Pa.

I est égal au moment d'inertie de la conduite 1 au droit du point de soulèvement P. I est exprimé en m⁴.

f est égal à la hauteur de soulèvement souhaitée (voir figure 2), f est exprimée en mètres et est comprise entre 0,03 mètres et 0,06 mètres.

α est égal à la pente de la conduite 1 sur la longueur de la conduite 1 égale à 2,5 x L dont la masse est reprise par le dispositif de levage 5, si cette pente est constante sur cette longueur de 2,5 x L ou bien est égal à la plus faible des pentes de la conduite 1 sur la longueur de la conduite 1 égale à 2,5 x L dont la masse est reprise par le dispositif de levage 5, si cette pente n'est pas constante sur cette longueur de 2,5 x L.

α est exprimé en degrés.

### Calcul de la contrainte σ subie par ladite conduite 1 lors du soulèvement à ladite hauteur f :

Cette contrainte σ subie par ladite conduite 1 lors du soulèvement de la conduite 1 à ladite hauteur f, est égale à : $M x D / \left(2 x I\right) + La x ma x g x sin \left(αa\right) / S + 3 x E x f x D / \left(2 x {Lm}^{2}\right)$ avec M égal au moment de la flexion liée au poids de la conduite à protéger 1, exprimé en N.m et M = L / 4 x g x m x cos(α).

La contrainte σ est exprimée en Pa et la hauteur f en mètres.

Dans ces deux formules, Lm, L, m, g, E, I, f et l'angle α ont les mêmes significations que celles mentionnées ci-dessus pour le calcul de la force de levage F.

Par ailleurs :
ma est égal à la valeur maximale de la masse par unité de longueur de la conduite 1 sur la longueur de la conduite 1 comprise entre le massif d'ancrage amont 3 et le point de soulèvement P.

ma est exprimée en kg/m.

D est égal au diamètre de la conduite 1. D est exprimé en mètres.

La est égale à la longueur de la conduite 1 comprise entre le massif d'ancrage amont 3 et le point de soulèvement P. La est exprimée en mètres. La est inférieure ou égale à 20 mètres.

S est égal à la section de la conduite 1 au droit du point de soulèvement P. S est exprimée en m².

αa est égal à la pente de la conduite 1 sur la longueur de la conduite 1 comprise entre le massif d'ancrage amont 3 et le point de soulèvement P, si cette pente est constante ou bien est égal à la plus élevée des pentes de la conduite 1 comprise entre le massif d'ancrage amont 3 et le point de soulèvement P, si cette pente n'est pas constante.

αa est exprimé en degrés.

### Deuxième situation.

La figure 3 illustre une deuxième situation dans laquelle la conduite 1 à protéger est retenue de manière fixe dans un massif d'ancrage amont 3 et dans un massif d'ancrage aval 4, et le berceau à protéger 2a et ledit au moins un autre berceau de support 2 sont disposés entre les massifs 3 et 4, comme précédemment, mais dans laquelle le point de soulèvement P est situé à une distance du massif d'ancrage amont 3 ou du massif d'ancrage aval 4 dont il est le plus proche, qui est supérieure à 20 mètres.

Dans l'exemple représenté, le point P est à plus de 20 mètres du massif d'ancrage amont 3 dont il est le plus proche.

Dans cette deuxième situation, la force de levage F à appliquer pour soulever la conduite 1 et la contrainte σ subie par cette conduite lors de ce soulèvement sont calculées comme suit.

### Calcul de la force de levage F à appliquer pour soulever la conduite 1 d'une hauteur f comprise entre 0,03 mètres et 0,06 mètres, par rapport audit berceau à protéger 2a :

La force de levage F, exprimée en Newton, est égale à : $3 \times L 1 \times m 1 \times g \times cos \left(αb\right)$ avec :
L1 égal à la distance maximale entre deux berceaux de support 2 successifs, sur une distance comprise entre le deuxième berceau de support 2 à l'amont du point de soulèvement P et le deuxième berceau de support 2 à l'aval du point de soulèvement P.

L1 est exprimée en mètres.

Dans cette deuxième situation où le point de soulèvement P est plus loin du massif d'ancrage dont il est le plus proche, et comme on peut le voir sur la figure 4, on considère que la longueur de la conduite 1 dont la masse est reprise (soulevée) par le dispositif de levage 5 lorsque celui-ci est appliqué au point de soulèvement P, est égale à 3 x L1.

m1 est égal à la valeur maximale de la masse par unité de longueur de la conduite 1, sur la longueur de la conduite 1 égale à 3 x L1 dont la masse est reprise par le dispositif de levage 5.

m1 est exprimée en kg/m.

g (accélération de la pesanteur à la surface de la terre) est égal à 9,81 m/s².

αb en degrés est égal à la pente de la conduite 1 sur la longueur de la conduite 1 égale à 3 x L1 dont la masse est reprise par le dispositif de levage 5, si cette pente est constante sur cette longueur de 3 x L1 ou bien est égal à la plus faible des pentes de la conduite 1 sur la longueur de la conduite 1 égale à 3 x L1 dont la masse est reprise par le dispositif de levage 5, si cette pente n'est pas constante sur cette longueur de 3 x L1.

αb est exprimé en degrés.

### Calcul de la contrainte σ subie par ladite conduite 1 lors du soulèvement à ladite hauteur f :

La contrainte σ subie par ladite conduite lors du soulèvement à ladite hauteur f est égale à : $M \times D / \left(2\times I\right) + La \times ma \times g \times sin \left(αa\right) / S$ avec M est égal au moment de la flexion liée au poids de la conduite à protéger 1, exprimée en N. m et M = L1 / 3 x g x m1 x cos(αb)

La contrainte σ est exprimée en Pa et la hauteur f en mètres.

Dans ces deux formules, L1, m1, g et αb ont les mêmes significations que celles mentionnées ci-dessus dans la deuxième situation pour le calcul de la force de levage F.

Par ailleurs :
ma est égal à la valeur maximale de la masse par unité de longueur de la conduite 1 sur la longueur de la conduite 1 comprise entre le massif d'ancrage amont 3 et le point de soulèvement P.

En d'autres termes, que cette masse par unité de longueur soit constante ou non, on prend toujours la valeur maximale de cette masse par unité de longueur. P. Par exemple, si la masse par unité de longueur est égale à 1 000 kg/m sur une distance égale à L et 1 200 kg/m sur une distance égale à 1,5 x L, on retient pour le calcul une masse par unité de longueur égale à 1 200 kg/m.

ma est exprimée en kg/m.

D est égal au diamètre de la conduite 1. D est exprimé en mètres.

I est égal au moment d'inertie de la conduite 1 au droit du point de soulèvement P. I est exprimé en m⁴.

La est égale à la longueur de la conduite 1 comprise entre le massif d'ancrage amont 3 et le point de soulèvement P. La est exprimée en mètres. La est supérieure à 20 mètres.

S est égal à la section de la conduite 1 au droit du point de soulèvement P. S est exprimée en m².

f est égal à la hauteur de soulèvement souhaitée (voir figure 4), f est exprimée en mètres et est comprise entre 0,03 mètres et 0,06 mètres.

αa est égal à la pente de la conduite 1 sur la longueur de la conduite 1 comprise entre le massif d'ancrage amont 3 et le point de soulèvement P, si cette pente est constante ou bien est égal à la plus élevée des pentes de la conduite 1 comprise entre le massif d'ancrage amont 3 et le point de soulèvement P, si cette pente n'est pas constante.

αa est exprimé en degrés.

## Revendications

1. Procédé de prévention de la corrosion à l'interface de contact entre une conduite en acier à protéger (1), notamment une conduite forcée, et un berceau de support (2, 2a) en acier de cette conduite (1), dit « berceau à protéger » (2a), cette conduite (1) reposant sur ledit berceau à protéger (2a) et sur au moins un autre berceau de support (2), ce procédé étant **caractérisé en ce qu'**il comprend les étapes suivantes :
- a) calcul de la force de levage (F) à appliquer en un point de soulèvement (P) de la conduite à protéger (1) pour soulever ladite conduite à protéger (1) d'une hauteur f comprise entre 0,03 m et 0,06 m, par rapport audit berceau à protéger (2a),
- b) calcul de la valeur de la contrainte σ subie par ladite conduite (1) lors du levage à ladite hauteur f,
- c) comparaison de cette valeur de contrainte σ subie avec une valeur maximale de contrainte σ max au-delà de laquelle la conduite (1) est endommagée, cette valeur maximale de contrainte σ max étant égale à min (Re / 1,35 ; Rm / 1,8), Re étant la limite élastique du matériau constituant ladite conduite (1) et Rm étant la résistance à la rupture du matériau constituant la conduite (1), et si σ est inférieure ou égale à σ max, alors réalisation des étapes suivantes :
- d) choix d'un dispositif de levage (5), tel un vérin, capable d'appliquer la force de levage (F) calculée à l'étape a),
- e) pose d'au moins une plaque de répartition d'efforts (6) sur le sol, au droit du point de soulèvement (P) de la conduite (1), fixation d'un berceau de soulèvement (7) contre ladite conduite (1) au niveau dudit point de soulèvement (P) et positionnement du dispositif de levage (5) choisi à l'étape d) entre ladite plaque de répartition d'efforts (6) et le berceau de soulèvement (7),
f) actionnement du dispositif de levage (5) pour soulever la conduite (1) de la hauteur f au-dessus du berceau à protéger (2a),
g) introduction d'au moins une tôle en zinc (8) entre ledit berceau à protéger (2a) et la conduite à protéger (1), cette tôle en zinc (8) couvrant la totalité de la surface de contact (20) entre la conduite à protéger (1) et le berceau à protéger (2a),
h) abaissement de la conduite à protéger (1) pour la poser sur ladite au moins une tôle de zinc (8).

2. Procédé selon la revendication 1, **caractérisé en ce que** ladite au moins une tôle en zinc (8) est fixée sur le berceau à protéger (2a) par pliage et martelage de ses rebords contre ledit berceau à protéger (2a) et/ou par fixation à l'aide d'éléments de fixation (81), tels des vis et chevilles.

3. Procédé selon la revendication 1 ou 2, **caractérisé en ce que** le point de soulèvement (P) est situé à une distance dudit berceau à protéger (2a) inférieure à 2 mètres, de préférence inférieure à 1 mètre.

4. Procédé selon l'une quelconque des revendications précédentes, **caractérisé en ce que** le berceau de soulèvement (7) est choisi de façon à présenter une surface de contact avec la conduite à protéger (1) égale ou supérieure à la surface de contact entre le berceau à protéger (2a) et la conduite à protéger (1).

5. Procédé selon l'une quelconque des revendications précédentes, **caractérisé en ce que** ladite conduite en acier à protéger (1) est retenue de manière fixe dans un massif d'ancrage amont (3) et dans un massif d'ancrage aval (4), **en ce que** ledit berceau à protéger (2a) et ledit au moins un autre berceau de support (2) sont disposés entre ledit massif d'ancrage amont (3) et ledit massif d'ancrage aval (4), **en ce que** le point de soulèvement (P) est situé à une distance du massif d'ancrage amont (3) ou aval (4) dont il est le plus proche qui est inférieure ou égale à 20 mètres et **en ce que** la force de levage F, exprimée en Newton, est égale à : $2 , 5 \times L \times m \times g \times cos \left(α\right) + 3 \times E \times I \times f / {Lm}^{3} ,$
avec :
- Lm égal à la distance entre le point de soulèvement (P) de la conduite à protéger (1) et le massif d'ancrage aval (4) ou amont (3) le plus proche de ce point de soulèvement (P), exprimée en mètres, et Lm inférieure ou égale à 20 mètres,
- L égal à la distance maximale entre deux berceaux de support (2) successifs, exprimée en mètres, sur une distance égale à 3 x Lm, cette distance de 3 x Lm étant mesurée depuis le massif d'ancrage amont 3 ou aval 4 dont le point de soulèvement P est le plus proche,
- m, exprimée en kg/m, est égal à la valeur maximale de la masse par unité de longueur de la conduite (1), sur la longueur de la conduite (1) égale à 2,5 x L dont la masse est reprise par le dispositif de levage (5),
- g égal à 9,81 m/s²,
- E, exprimé en Pa, égal au module de Young du matériau de la conduite (1),
- I égal au moment d'inertie de la conduite (1) au droit du point de soulèvement (P), exprimé en m⁴,
- f étant égal à la hauteur de soulèvement souhaitée, exprimée en mètres et comprise entre 0,03 m et 0,06 m,
- α, exprimé en degrés, est égal à la pente de la conduite (1) sur la longueur de la conduite (1) égale à 2,5 x L dont la masse est reprise par le dispositif de levage (5), si cette pente est constante sur cette longueur de 2,5 x L ou bien est égal à la plus faible des pentes de la conduite (1) sur la longueur de la conduite (1) égale à 2,5 x L dont la masse est reprise par le dispositif de levage (5), si cette pente n'est pas constante sur cette longueur de 2,5 x L.

6. Procédé selon la revendication 5, **caractérisé en ce que** la contrainte σ, exprimée en Pa, subie par ladite conduite (1) lors du soulèvement à ladite hauteur f exprimée en mètres, est égale à : $M x D / \left(2 x I\right) + La x ma x g x sin \left(αa\right) / S + 3 x E x f x D / \left(2 x {Lm}^{2}\right) ,$ avec
- M égal au moment de la flexion liée au poids de la conduite à protéger (1), exprimé en N.m et M = L / 4 x g x m x cos(α), avec
- Lm égal à la distance entre le point de soulèvement (P) de la conduite à protéger (1) et le massif d'ancrage aval (4) ou amont (3) le plus proche de ce point de soulèvement (P), exprimée en mètres, et Lm inférieur ou égal à 20 mètres,
- L égal à la distance maximale entre deux berceaux de support successifs (2), exprimée en mètres, sur une distance égale à 3 x Lm, cette distance de 3 x Lm étant mesurée depuis le massif d'ancrage amont 3 ou aval 4 dont le point de soulèvement P est le plus proche,
- m, exprimée en kg/m, est égal à la valeur maximale de la masse par unité de longueur de la conduite (1), sur la longueur de la conduite (1) égale à 2,5 x L dont la masse est reprise par le dispositif de levage (5),
- ma, exprimée en kg/m, est égal à la valeur maximale de la masse par unité de longueur de la conduite (1) sur la longueur de la conduite (1) comprise entre le massif d'ancrage amont (3) et le point de soulèvement (P
- g égal à 9,81 m/s²,
- E, exprimé en Pa, égal au module de Young du matériau de la conduite (1),
- I égal au moment d'inertie de la conduite (1) au droit du point de soulèvement (P), exprimé en m⁴,
- D égal au diamètre de la conduite (1), exprimé en mètres,
- La égal à la longueur de la conduite (1) comprise entre le massif d'ancrage amont (3) et ledit point de soulèvement (P), exprimée en mètres,
- S égal à la section de la conduite (1) au droit du point de soulèvement (P), exprimée en m²,
- f étant égal à la hauteur de soulèvement souhaitée, exprimée en mètres et comprise entre 0,03 m et 0,06 m,
- α, exprimé en degrés, est égal à la pente de la conduite (1) sur la longueur de la conduite (1) égale à 2,5 x L dont la masse est reprise par le dispositif de levage (5), si cette pente est constante sur cette longueur de 2,5 x L ou bien est égal à la plus faible des pentes de la conduite (1) sur la longueur de la conduite (1) égale à 2,5 x L dont la masse est reprise par le dispositif de levage (5), si cette pente n'est pas constante sur cette longueur de 2,5 x L,
- αa, exprimé en degrés, est égal à la pente de la conduite (1) sur la longueur de la conduite (1) comprise entre le massif d'ancrage amont (3) le point de soulèvement (P), si cette pente est constante ou bien est égal à la plus élevée des pentes de la conduite (1) comprise entre le massif d'ancrage amont (3) et le point de soulèvement (P), si cette pente n'est pas constante.

7. Procédé selon l'une quelconque des revendications 1 à 4, **caractérisé en ce que** ladite conduite en acier à protéger (1) est retenue de manière fixe dans un massif d'ancrage amont (3) et dans un massif d'ancrage aval (4), **en ce que** ladite conduite en acier à protéger (1) est supportée par au moins quatre berceaux de support (2, 2a) dont ledit berceau à protéger (2a), disposés entre ledit massif d'ancrage amont (3) et ledit massif d'ancrage aval (4), **en ce que** le point de soulèvement (P) est situé à une distance du massif d'ancrage amont (3) ou aval (4) dont il est le plus proche qui est supérieure à 20 mètres et **en ce que** la force de levage F, exprimée en Newton, est égale à : $3 \times L 1 \times m 1 \times g \times cos \left(αb\right)$ avec :
- L1 égal à la distance maximale entre deux berceaux de support (2) successifs, exprimée en mètres, sur une distance comprise entre le deuxième berceau de support (2) à l'amont du point de soulèvement (P) et le deuxième berceau de support (2) à l'aval du point de soulèvement (P),
- m1, exprimée en kg/m, est égal à la valeur maximale de la masse par unité de longueur de la conduite (1), sur la longueur de la conduite (1) égale à 3 x L1 dont la masse est reprise par le dispositif de levage (5),
- g égal à 9,81 m/s²,
- αb, exprimé en degrés, est égal à la pente de la conduite (1) sur la longueur de la conduite (1) égale à 3 x L1 dont la masse est reprise par le dispositif de levage (5), si cette pente est constante sur cette longueur de 3 x L1 ou bien est égal à la plus faible des pentes de la conduite (1) sur la longueur de la conduite (1) égale à 3 x L1 dont la masse est reprise par le dispositif de levage (5), si cette pente n'est pas constante sur cette longueur de 3 x L1.

8. Procédé selon la revendication 7, **caractérisé en ce que** la contrainte σ, exprimée en Pa, subie par ladite conduite (1) lors du soulèvement à ladite hauteur f exprimée en mètres, est égale à : $M \times D / \left(2\times I\right) + La \times ma \times g \times sin \left(αa\right) / S$ avec
M égal au moment de la flexion liée au poids de la conduite à protéger (1), exprimée en N.m et M = L1 / 3 x g x m1 x cos(αb), avec
- L1 égal à la distance maximale entre deux berceaux de support successifs (2), exprimée en mètres, sur une distance comprise entre le deuxième berceau de support (2) à l'amont du point de soulèvement (P) et le deuxième berceau de support (2) à l'aval du point de soulèvement (P),
- m1, exprimée en kg/m, est égal à la valeur maximale de la masse par unité de longueur de la conduite (1), sur la longueur de la conduite (1) égale à 3 x L1 dont la masse est reprise par le dispositif de levage (5),
- ma, exprimée en kg/m, est égal à la valeur maximale de la masse par unité de longueur de la conduite (1) sur la longueur de la conduite (1) comprise entre le massif d'ancrage amont (3) et le point de soulèvement (P),
- D égal au diamètre de la conduite, exprimé en mètres,
- g égal à 9,81 m/s²,
- I égal au moment d'inertie de la conduite (1) au droit du point de soulèvement (P), exprimé en m⁴,
- La égal à la longueur de la conduite (1) entre le massif d'ancrage amont (3) et le point de soulèvement (P), exprimée en mètres, et La supérieur à 20 mètres,
- S égal à la section de la conduite (1) au droit du point de soulèvement (P), exprimée en m²,
f étant égal à la hauteur de soulèvement souhaitée, exprimée en mètres et comprise entre 0,03 m et 0,06 m,
- αb, exprimé en degrés, est égal à la pente de la conduite (1) sur la longueur de la conduite (1) égale à 3 x L1 dont la masse est reprise par le dispositif de levage (5), si cette pente est constante sur cette longueur de 3 x L1 ou bien est égal à la plus faible des pentes de la conduite (1) sur la longueur de la conduite (1) égale à 3 x L1 dont la masse est reprise par le dispositif de levage (5), si cette pente n'est pas constante sur cette longueur de 3 x L1,
- αa, exprimé en degrés, est égal à la pente de la conduite (1) sur la longueur de la conduite (1) comprise entre le massif d'ancrage amont (3) et le point de soulèvement (P), si cette pente est constante ou bien est égal à la plus élevée des pentes de la conduite (1) comprise entre le massif d'ancrage amont (3) et le point de soulèvement (P), si cette pente n'est pas constante.

## Patentansprüche

1. Verfahren zum Schutz vor Korrosion an der Kontaktschnittstelle zwischen einer zu schützenden Rohrleitung aus Stahl (1), insbesondere einer Rohrleitung unter Druck, und einem Traggestell (2, 2a) aus Stahl dieser Rohrleitung (1), bezeichnet als "zu schützendes Gestell" (2a), wobei diese Rohrleitung (1) auf dem zu schützenden Traggestell (2a) und auf mindestens einem weiteren Traggestell (2) aufliegt, wobei dieses Verfahren **dadurch gekennzeichnet ist, dass** es die folgenden Schritte umfasst:
- a) Berechnen der an einem Hebepunkt (P) der zu schützenden Rohrleitung (1) anzuwendenden Hebekraft (F), um die zu schützende Rohrleitung (1) um eine Höhe f zwischen 0,03 m und 0,06 m relativ zu dem zu schützenden Traggestell (2a) anzuheben,
- b) Berechnen des Wertes der Beanspruchung σ, der die Rohrleitung (1) beim Anheben um die Höhe f ausgesetzt ist,
- c) Vergleichen dieses Wertes der erlittenen Beanspruchung σ mit einem maximalen Beanspruchungswert σ max, ab dem die Rohrleitung (1) beschädigt wird, wobei dieser maximale Beanspruchungswert σ max gleich min (Re/1,35; Rm/1,8) ist, wobei Re die Streckgrenze des Materials ist, aus dem die Rohrleitung (1) besteht, und Rm die Bruchfestigkeit des Materials ist, aus dem die Rohrleitung (1) besteht, und wenn σ kleiner oder gleich σ max ist, dann Durchführung der folgenden Schritte:
- d) Auswählen einer Hebevorrichtung (5), beispielsweise eines Zylinders, die in der Lage ist, die in Schritt a) berechnete Hebekraft (F) aufzubringen,
- e) Aufstellen mindestens einer Kraftverteilungsplatte (6) auf dem Boden genau am Hebepunkt (P) der Rohrleitung (1), Befestigung eines Hebegestells (7) an der Rohrleitung (1) im Bereich des Hebepunkts (P) und Positionieren der in Schritt d) ausgewählten Hebevorrichtung (5) zwischen der Kraftverteilungsplatte (6) und dem Hebegestell (7),
- f) Betätigen der Hebevorrichtung (5), um die Rohrleitung (1) um die Höhe f über das zu schützenden Traggestell (2a) anzuheben,
- g) Einlegen mindestens eines Zinkblechs (8) zwischen das zu schützenden Traggestell (2a) und die zu schützende Rohrleitung (1), wobei dieses Zinkblech (8) die gesamte Kontaktfläche (20) zwischen der zu schützenden Rohrleitung (1) und dem zu schützenden Traggestell (2a) bedeckt,
- h) Absenken der zu schützenden Rohrleitung (1), um sie auf dem mindestens einen Zinkblech (8) abzulegen.

2. Verfahren nach Anspruch 1, **dadurch gekennzeichnet, dass** das mindestens eine Zinkblech (8) an dem zu schützenden Gestell (2a) befestigt wird, indem seine Ränder gegen das zu schützende Gestell (2a) gebogen und gehämmert werden und/oder durch Befestigung mit Befestigungselementen (81), wie beispielsweise Schrauben und Dübeln.

3. Verfahren nach Anspruch 1 oder 2, **dadurch gekennzeichnet, dass** sich der Hebepunkt (P) in einem Abstand von weniger als 2 Metern, vorzugsweise weniger als 1 Meter, von dem zu schützenden Gestell (2a) befindet.

4. Verfahren nach einem der vorstehenden Ansprüche, **dadurch gekennzeichnet, dass** das Hebegestell (7) so gewählt ist, dass es eine Kontaktfläche mit der zu schützenden Rohrleitung (1) aufweist, die gleich oder größer als die Kontaktfläche zwischen dem zu schützenden Gestell (2a) und der zu schützenden Rohrleitung (1) ist.

5. Verfahren nach einem der vorstehenden Ansprüche, **dadurch gekennzeichnet, dass** die zu schützende Rohrleitung aus Stahl (1) fest in einem stromaufwärts gelegenen Verankerungsblock (3) und in einem stromabwärts gelegenen Verankerungsblock (4) gehalten wird, dass das zu schützende Gestell (2a) und das mindestens eine weitere Traggestell (2) zwischen dem stromaufwärts gelegenen Verankerungsblock (3) und dem stromabwärts gelegenen Verankerungsblock (4) angeordnet sind, dass sich der Hebepunkt (P) in einem Abstand von dem ihm am nächsten gelegenen stromaufwärts (3) oder stromabwärts (4) gelegenen Verankerungspunkt befindet, der unter oder gleich 20 Meter beträgt und dass die Hebekraft F, ausgedrückt in Newton, gleich ist: $2 , 5 \times L \times m \times g \times cos \left(α\right) + 3 \times E \times I \times f / {Lm}^{3} ,$ wobei:
- Lm gleich dem Abstand zwischen dem Hebepunkt (P) der zu schützenden Rohrleitung (1) und dem diesem Hebepunkt (P) am nächsten gelegenen stromabwärts (4) oder stromaufwärts (3) gelegenen Verankerungsblock, ausgedrückt in Metern, ist, und Lm kleiner oder gleich 20 Meter ist,
- L gleich dem maximalen Abstand zwischen zwei aufeinanderfolgenden Traggestellen (2), ausgedrückt in Metern, über einen Abstand von 3 × Lm, ist, wobei dieser Abstand von 3 × Lm von dem stromaufwärts gelegenen (3) oder stromabwärts gelegenen (4) Verankerungsblock gemessen wird, dessen Hebepunkt P am nächsten liegt,
- m, ausgedrückt in kg/m, gleich dem Maximalwert der Masse pro Längeneinheit der Rohrleitung (1) über die Länge der Rohrleitung (1) von gleich 2,5 × L ist, deren Masse von der Hebevorrichtung (5) aufgenommen wird,
- g gleich 9,81 m/s² ist,
- E, ausgedrückt in Pa, gleich dem Young-Modul des Materials der Rohrleitung (1) ist,
- I gleich dem Trägheitsmoment der Rohrleitung (1) genau am Hebepunkt (P), ausgedrückt in m⁴, ist,
- f gleich der gewünschten Hubhöhe, ausgedrückt in Metern, ist, die zwischen 0,03 m und 0,06 m liegt,
- α, ausgedrückt in Grad, gleich der Neigung der Rohrleitung (1) über die Länge der Rohrleitung (1) von gleich 2,5 × L ist, deren Masse von der Hebevorrichtung (5) aufgenommen wird, wenn diese Neigung über diese Länge von 2,5 × L konstant ist, oder gleich der kleinsten der Neigungen der Rohrleitung (1) über die Länge der Rohrleitung (1) von gleich 2,5 × L ist, deren Masse von der Hebevorrichtung (5) aufgenommen wird, wenn diese Neigung über diese Länge von 2,5 × L nicht konstant ist.

6. Verfahren nach Anspruch 5, **dadurch gekennzeichnet, dass** die in Pa ausgedrückte Beanspruchung σ, der die Rohrleitung (1) beim Anheben um die in Metern ausgedrückte Höhe f ausgesetzt ist, gleich ist: 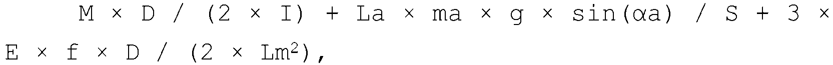 M × D / (2 × I) + La × ma × g × sin(αa) / S + 3 × E × f × D / (2 × Lm2), wobei
- M gleich dem Biegemoment ist, das mit dem Gewicht der zu schützenden Rohrleitung (1) verbunden ist, ausgedrückt in N.m, und M = L / 4 × g × m × cos(α), wobei
- Lm gleich dem Abstand zwischen dem Hebepunkt (P) der zu schützenden Rohrleitung (1) und dem diesem Hebepunkt (P) am nächsten gelegenen stromabwärts (4) oder stromaufwärts (3) gelegenen Verankerungsblock, ausgedrückt in Metern, ist, und Lm kleiner oder gleich 20 Meter ist,
- L gleich dem maximalen Abstand zwischen zwei aufeinanderfolgenden Traggestellen (2), ausgedrückt in Metern, über einen Abstand von 3 × Lm, ist, wobei dieser Abstand von 3 × Lm von dem stromaufwärts gelegenen (3) oder stromabwärts gelegenen (4) Verankerungsblock gemessen wird, dessen Hebepunkt (P) am nächsten liegt,
- m, ausgedrückt in kg/m, gleich dem Maximalwert der Masse pro Längeneinheit der Rohrleitung (1) über die Länge der Rohrleitung (1) von gleich 2,5 × L ist, deren Masse von der Hebevorrichtung (5) aufgenommen wird,
- ma, ausgedrückt in kg/m, gleich dem Maximalwert der Masse pro Längeneinheit der Rohrleistung (1) über die Länge der Rohrleistung (1) ist, die zwischen dem stromaufwärts gelegenen Verankerungspunkt (3) und dem Hebepunkt (P) liegt,
- g gleich 9,81 m/s² ist,
- E, ausgedrückt in Pa, gleich dem Young-Modul des Materials der Rohrleitung (1) ist,
- I gleich dem Trägheitsmoment der Rohrleitung (1) genau am Hebepunkt (P), ausgedrückt in m⁴, ist,
- D gleich dem Durchmesser der Rohrleitung (1), ausgedrückt in Metern, ist,
- La gleich der Länge der Rohrleitung (1) zwischen dem stromaufwärts gelegenen Verankerungsblock (3) und dem Hebepunkt (P), ausgedrückt in Metern, ist,
- S gleich dem Querschnitt der Rohrleitung (1) genau am Hebepunkt (P), ausgedrückt in m², ist,
- f gleich der gewünschten Hubhöhe, ausgedrückt in Metern, ist, die zwischen 0,03 m und 0,06 m liegt,
- α, ausgedrückt in Grad, gleich der Neigung der Rohrleitung (1) über die Länge der Rohrleitung (1) von gleich 2,5 × L ist, deren Masse von der Hebevorrichtung (5) aufgenommen wird, wenn diese Neigung über diese Länge von 2,5 × L konstant ist, oder gleich der kleinsten der Neigungen der Rohrleitung (1) über die Länge der Rohrleitung (1) von gleich 2,5 × L ist, deren Masse von der Hebevorrichtung (5) aufgenommen wird, wenn diese Neigung über diese Länge von 2,5 × L nicht konstant ist,
- αa, ausgedrückt in Grad, gleich der Neigung der Rohrleitung (1) über die Länge der Rohrleitung (1) zwischen dem stromaufwärts gelegenen Verankerungsblock (3) und dem Hebepunkt (P) ist, wenn diese Neigung konstant ist, oder gleich der größten der Neigungen der Rohrleitung (1) zwischen dem stromaufwärts gelegenen Verankerungsblock (3) und dem Hebepunkt (P) ist, wenn diese Neigung nicht konstant ist.

7. Verfahren nach einem der Ansprüche 1 bis 4, **dadurch gekennzeichnet, dass** die zu schützende Rohrleitung aus Stahl (1) fest in einem stromaufwärts gelegenen Verankerungsblock (3) und in einem stromabwärts gelegenen Verankerungsblock (4) gehalten wird, dass die zu schützende Rohrleitung aus Stahl (1) von mindestens vier Traggestellen (2, 2a) getragen wird, darunter dem zu schützenden Traggestell (2a), das zwischen dem stromaufwärts gelegenen Verankerungsblock (3) und dem stromabwärts gelegenen Verankerungsblock (4) angeordnet sind, dass sich der Hebepunkt (P) in einem Abstand von dem ihm am nächsten gelegenen stromaufwärts gelegenen (3) oder stromabwärts gelegenen (4) Verankerungsblock befindet, der über 20 Meter beträgt, und dass die Hebekraft F, ausgedrückt in Newton, gleich ist: $3 \times L 1 \times m 1 \times g \times cos \left(αb\right) ,$ wobei:
- L1 der maximale Abstand zwischen zwei aufeinanderfolgenden Traggestellen (2), ausgedrückt in Metern, über einen Abstand zwischen dem zweiten Traggestell (2) stromaufwärts des Hebepunkts (P) und dem zweiten Traggestell (2) stromabwärts des Hebepunkts (P) ist,
- m1, ausgedrückt in kg/m, gleich dem Maximalwert der Masse pro Längeneinheit der Rohrleitung (1) über die Länge der Rohrleitung (1) von gleich 3 × L1 ist, deren Masse von der Hebevorrichtung (5) aufgenommen wird,
- g gleich 9,81 m/s² ist,
- αb, ausgedrückt in Grad, gleich der Neigung der Rohrleitung (1) über die Länge der Rohrleitung (1) von gleich 3 x L1 ist, deren Masse von der Hebevorrichtung (5) aufgenommen wird, wenn diese Neigung über diese Länge von 3 × L1 konstant ist, oder gleich der kleinsten der Neigungen der Rohrleitung (1) über die Länge der Rohrleitung (1) von gleich 3 × L1 ist, deren Masse von der Hebevorrichtung (5) aufgenommen wird, wenn diese Neigung über diese Länge von 3 × L1 nicht konstant ist.

8. Verfahren nach Anspruch 7, **dadurch gekennzeichnet, dass** die in Pa ausgedrückte Beanspruchung σ, der die Rohrleitung (1) beim Anheben um die in Metern ausgedrückte Höhe f ausgesetzt ist, gleich ist: $M \times D / \left(2\times I\right) + La \times ma \times g \times sin \left(αa\right) / S ,$ wobei
M gleich dem Biegemoment ist, das mit dem Gewicht der zu schützenden Rohrleitung (1) verbunden ist, ausgedrückt in N.m, und M = L1 / 3 × g × m1 × cos(αb), wobei
- L1 der maximale Abstand zwischen zwei aufeinanderfolgenden Traggestellen (2), ausgedrückt in Metern, über einen Abstand zwischen dem zweiten Traggestell (2) stromaufwärts des Hebepunkts (P) und dem zweiten Traggestell (2) stromabwärts des Hebepunkts (P) ist,
- m1, ausgedrückt in kg/m, gleich dem Maximalwert der Masse pro Längeneinheit der Rohrleitung (1) über die Länge der Rohrleitung (1) von gleich 3 × L1 ist, deren Masse von der Hebevorrichtung (5) aufgenommen wird,
- ma, ausgedrückt in kg/m, gleich dem Maximalwert der Masse pro Längeneinheit der Rohrleitung (1) über die Länge der Rohrleitung (1) zwischen dem stromaufwärts gelegenen Verankerungsblock (3) und dem Hebepunkt (P) ist,
- D gleich dem Durchmesser der Rohrleitung, ausgedrückt in Metern, ist,
- g gleich 9,81 m/s² ist,
- I gleich dem Trägheitsmoment der Rohrleitung (1) genau am Hebepunkt (P), ausgedrückt in m⁴, ist,
- La gleich der Länge der Rohrleitung (1) zwischen dem stromaufwärts gelegenen Verankerungsblock (3) und dem Hebepunkt (P), ausgedrückt in Metern, ist, und La größer als 20 Meter ist,
- S gleich dem Querschnitt der Rohrleitung (1) genau am Hebepunkt (P), ausgedrückt in m², ist,
wobei f gleich der gewünschten Hubhöhe, ausgedrückt in Metern, ist, die zwischen 0,03 m und 0,06 m liegt,
- αb, ausgedrückt in Grad, gleich der Neigung der Rohrleitung (1) über die Länge der Rohrleitung (1) von gleich 3 x L1 ist, deren Masse von der Hebevorrichtung (5) aufgenommen wird, wenn diese Neigung über diese Länge von 3 × L1 konstant ist, oder gleich der kleinsten der Neigungen der Rohrleitung (1) über die Länge der Rohrleitung (1) von gleich 3 × L1 ist, deren Masse von der Hebevorrichtung (5) aufgenommen wird, wenn diese Neigung über diese Länge von 3 × L1 nicht konstant ist,
- αa, ausgedrückt in Grad, gleich der Neigung der Rohrleitung (1) über die Länge der Rohrleitung (1) zwischen dem stromaufwärts gelegenen Verankerungsblock (3) und dem Hebepunkt (P) ist, wenn diese Neigung konstant ist, oder gleich der größten der Neigungen der Rohrleitung (1) zwischen dem stromaufwärts gelegenen Verankerungsblock (3) und dem Hebepunkt (P) ist, wenn diese Neigung nicht konstant ist.

## Claims

1. A method for preventing corrosion at the contact interface between a steel duct to be protected (1), in particular a penstock, and a steel support cradle (2, 2a) for this duct (1), referred to as "cradle to be protected" (2a), this duct (1) resting on said cradle to be protected (2a) and on at least one other support cradle (2), this method being **characterized in that** it comprises the following steps:
a) calculating the raising force (F) to be applied at a lifting point (P) of the duct to be protected (1) in order to lift said duct to be protected (1) by a height f comprised between 0.03 m and 0.06 m, relative to said cradle to be protected (2a),
b) calculating the value of the stress σ experienced by said duct (1) during the raising to said height f,
c) comparing this experienced stress value σ with a maximum stress value σ max beyond which the duct (1) is damaged, this maximum stress value σ max being equal to min(Re / 1.35; Rm / 1.8), where Re is the elastic limit of the material constituting said duct (1) and Rm is the tensile strength of the material constituting the duct (1), and if σ is less than or equal to σ max, then performing the following steps:
d) selecting a raising device (5), such as a jack, capable of applying the raising force (F) calculated in step a),
e) placing at least one load-distribution plate (6) on the ground, directly below the lifting point (P) of the duct (1), fixing a lifting cradle (7) against said duct (1) at the level of said lifting point (P) and positioning the raising device (5) selected in step d) between said load-distribution plate (6) and the lifting cradle (7),
f) actuating the raising device (5) to lift the duct (1) by the height f above the cradle to be protected (2a),
g) introducing at least one zinc sheet (8) between said cradle to be protected (2a) and the duct to be protected (1), this zinc sheet (8) covering the entire contact surface (20) between the duct to be protected (1) and the cradle to be protected (2a),
h) lowering the duct to be protected (1) to place it on said at least one zinc sheet (8).

2. The method according to claim 1, **characterized in that** said at least one zinc sheet (8) is fixed to the cradle to be protected (2a) by folding and hammering its edges against said cradle to be protected (2a) and/or by fixing using fixing elements (81), such as screws and pegs.

3. The method according to claim 1 or 2, **characterized in that** the lifting point (P) is located at a distance from said cradle to be protected (2a) of less than 2 meters, preferably less than 1 meter.

4. The method according to any one of the preceding claims, **characterized in that** the lifting cradle (7) is selected so as to present a contact surface with the duct to be protected (1) that is equal to or greater than the contact surface between the cradle to be protected (2a) and the duct to be protected (1).

5. The method according to any one of the preceding claims, **characterized in that** said steel duct to be protected (1) is fixedly retained in an upstream anchor block (3) and in a downstream anchor block (4), **in that** said cradle to be protected (2a) and said at least one other support cradle (2) are disposed between said upstream anchor block (3) and said downstream anchor block (4), **in that** the lifting point (P) is located at a distance from the upstream (3) or downstream (4) anchor block to which it is closest that is less than or equal to 20 meters, and **in that** the raising force F, expressed in Newton, is equal to: $2.5 x L x m x g x cos \left(α\right) + 3 x E x I x f / {Lm}^{3} ,$ where:
- Lm is equal to the distance between the lifting point (P) of the duct to be protected (1) and the downstream (4) or upstream (3) anchor block closest to this lifting point (P), expressed in meters, and Lm is less than or equal to 20 meters,
- L is equal to the maximum distance between two successive support cradles (2), expressed in meters, over a distance equal to 3 x Lm, this distance of 3 x Lm being measured from the upstream (3) or downstream (4) anchor block to which the lifting point (P) is closest,
- m, expressed in kg/m, is equal to the maximum value of the mass per unit length of the duct (1), over the length of the duct (1) equal to 2.5 x L whose mass is borne by the raising device (5),
- g is equal to 9.81 m/s²,
- E, expressed in Pa, is equal to the Young's modulus of the material of the duct (1),
- I is equal to the moment of inertia of the duct (1) directly above the lifting point (P), expressed in m⁴,
- f is equal to the desired lifting height, expressed in meters and comprised between 0.03 m and 0.06 m,
- α, expressed in degrees, is equal to the slope of the duct (1) over the length of the duct (1) equal to 2.5 x L whose mass is borne by the raising device (5), if this slope is constant over this length of 2.5 x L, or is equal to the lowest slope of the duct (1) over the length of the duct (1) equal to 2.5 x L whose mass is borne by the raising device (5), if this slope is not constant over this length of 2.5 x L.

6. The method according to claim 5, **characterized in that** the stress σ, expressed in Pa, experienced by said duct (1) during the lifting to said height f, expressed in meters, is equal to: 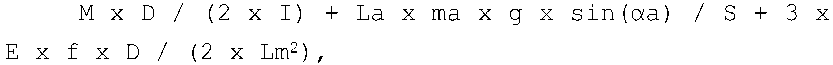 M x D / (2 x I) + La x ma x g x sin(αa) / S + 3 x E x f x D / (2 x Lm2), where
- M is equal to the bending moment related to the weight of the duct to be protected (1), expressed in N.m and M = L / 4 x g x m x cos(α), where
- Lm is equal to the distance between the lifting point (P) of the duct to be protected (1) and the downstream (4) or upstream (3) anchor block closest to this lifting point (P), expressed in meters, and Lm is less than or equal to 20 meters,
- L is equal to the maximum distance between two successive support cradles (2), expressed in meters, over a distance equal to 3 x Lm, this distance of 3 x Lm being measured from the upstream (3) or downstream (4) anchor block to which the lifting point P is closest,
- m, expressed in kg/m, is equal to the maximum value of the mass per unit length of the duct (1), over the length of the duct (1) equal to 2.5 x L whose mass is borne by the raising device (5),
- ma, expressed in kg/m, is equal to the maximum value of the mass per unit length of the duct (1) over the length of the duct (1) comprised between the upstream anchor block (3) and the lifting point (P),
- g is equal to 9.81 m/s²,
- E, expressed in Pa, is equal to the Young's modulus of the material of the duct (1),
- I is equal to the moment of inertia of the duct (1) directly above the lifting point (P), expressed in m⁴,
- D is equal to the diameter of the duct (1), expressed in meters,
- La is equal to the length of the duct (1) comprised between the upstream anchor block (3) and said lifting point (P), expressed in meters,
- S is equal to the section of the duct (1) directly above the lifting point (P), expressed in m²,
- f is equal to the desired lifting height, expressed in meters and comprised between 0.03 m and 0.06 m,
- α, expressed in degrees, is equal to the slope of the duct (1) over the length of the duct (1) equal to 2.5 x L whose mass is borne by the raising device (5), if this slope is constant over this length of 2.5 x L, or is equal to the lowest slope of the duct (1) over the length of the duct (1) equal to 2.5 x L whose mass is borne by the raising device (5), if this slope is not constant over this length of 2.5 x L,
- αa, expressed in degrees, is equal to the slope of the duct (1) over the length of the duct (1) comprised between the upstream anchor block (3) and the lifting point (P), if this slope is constant or is equal to the highest slope of the duct (1) comprised between the upstream anchor block (3) and the lifting point (P), if this slope is not constant.

7. The method according to any one of claims 1 to 4, **characterized in that** said steel duct to be protected (1) is fixedly retained in an upstream anchor block (3) and in a downstream anchor block (4), **in that** said steel duct to be protected (1) is supported by at least four support cradles (2, 2a) including said cradle to be protected (2a), disposed between said upstream anchor block (3) and said downstream anchor block (4), **in that** the lifting point (P) is located at a distance from the upstream (3) or downstream (4) anchor block to which it is closest that is greater than 20 meters, and **in that** the raising force F, expressed in Newton, is equal to: $3 \times L 1 \times m 1 \times g \times cos \left(αb\right)$ where:
- L1 is equal to the maximum distance between two successive support cradles (2), expressed in meters, over a distance comprised between the second support cradle (2) upstream of the lifting point (P) and the second support cradle (2) downstream of the lifting point (P),
- m1, expressed in kg/m, is equal to the maximum value of the mass per unit length of the duct (1), over the length of the duct (1) equal to 3 x L1 whose mass is borne by the raising device (5),
- g is equal to 9.81 m/s²,
- αb, expressed in degrees, is equal to the slope of the duct (1) over the length of the duct (1) equal to 3 x L1 whose mass is borne by the raising device (5), if this slope is constant over this length of 3 x L1, or is equal to the lowest slope of the duct (1) over the length of the duct (1) equal to 3 x L1 whose mass is borne by the raising device (5), if this slope is not constant over this length of 3 × L1.

8. The method according to claim 7, **characterized in that** the stress σ, expressed in Pa, experienced by said duct (1) during the lifting to said height f expressed in meters, is equal to: $M x D / \left(2 x I\right) + La x ma x g x sin \left(αa\right) / S ,$ where
M is equal to the bending moment related to the weight of the duct to be protected (1), expressed in N.m, and M = L1 / 3 x g x m1 x cos(αb), where
- L1 is equal to the maximum distance between two successive support cradles (2), expressed in meters, over a distance comprised between the second support cradle (2) upstream of the lifting point (P) and the second support cradle (2) downstream of the lifting point (P),
- m1, expressed in kg/m, is equal to the maximum value of the mass per unit length of the duct (1), over the length of the duct (1) equal to 3 x L1 whose mass is borne by the raising device (5),
- ma, expressed in kg/m, is equal to the maximum value of the mass per unit length of the duct (1) over the length of the duct (1) comprised between the upstream anchor block (3) and the lifting point (P),
- D is equal to the diameter of the duct, expressed in meters,
- g is equal to 9.81 m/s²,
- I is equal to the moment of inertia of the duct (1) directly above the lifting point (P), expressed in m⁴,
- La is equal to the length of the duct (1) between the upstream anchor block (3) and the lifting point (P), expressed in meters, and La is greater than 20 meters,
- S is equal to the section of the duct (1) directly above the lifting point (P), expressed in m²,
- f is equal to the desired lifting height, expressed in meters and comprised between 0.03 m and 0.06 m,
- αb, expressed in degrees, is equal to the slope of the duct (1) over the length of the duct (1) equal to 3 x L1 whose mass is borne by the raising device (5), if this slope is constant over this length of 3 x L1, or is equal to the lowest slope of the duct (1) over the length of the duct (1) equal to 3 x L1 whose mass is borne by the raising device (5), if this slope is not constant over this length of 3 x L1,
- αa, expressed in degrees, is equal to the slope of the duct (1) over the length of the duct (1) comprised between the upstream anchor block (3) and the lifting point (P), if this slope is constant or is equal to the highest slope of the duct (1) comprised between the upstream anchor block (3) and the lifting point (P), if this slope is not constant.
